# EUROPÄISCHE PATENTSCHRIFT

(11) **EP 1 060 003 B1**
(45) Veröffentlichungstag und Bekanntmachung des Hinweises auf die Patenterteilung: **06.11.2002**
(21) Anmeldenummer: 99913153.5
(22) Anmeldetag: 10.02.1999
(51) Int. Cl.: B01D 53/94, B01D 53/86, F01N 3/08, F01N 3/20

(54) **STEUERUNG EINES NOX-ABSORBER-KATALYSATORS**
CONTROL OF AN NOx-ABSORBING CATALYTIC CONVERTER
PROCEDE DE REGULATION D'UN CATALYSEUR ABSORBEUR DE NOx

(30) Priorität: 27.02.1998 DE 19808382
(43) Veröffentlichungstag der Anmeldung: 20.12.2000
(73) Patentinhaber: Volkswagen Aktiengesellschaft, 38436 Wolfsburg (DE)
(72) Erfinder: HAHN, Hermann, D-38165 Lehre (DE)
(74) Vertreter: Meyer, Enno, Dr.
(86) Internationale Anmeldenummer: EP9900864
(87) Internationale Veröffentlichungsnummer: WO99043420

(56) Entgegenhaltungen:
- EP-A- 0 636 770
- EP-A- 0 735 250
- DE-A- 19 511 548
- PATENT ABSTRACTS OF JAPAN vol. 095, no. 009, 31. Oktober 1995 & JP 07 166851 A (TOYOTA MOTOR CORP), 27. Juni 1995

## Beschreibung

Die Erfindung betrifft eine Steuerung eines NOx-Absorber-Katalysators mit einem NOx-Sensor, insbesondere die Steuerung der Katalysatorregeneration durch die Überwachung des Abgases mit einem NOx-Sensor.

Bei mager betriebenen Otto-Motoren entsteht im Abgasstrom aufgrund der mageren Brennbedingungen Stickoxide NOx, die wegen der schädlichen Auswirkung auf die Umwelt entfernt werden müssen. Zur Entstickung eines mageren Abgases werden bevorzugt NOx-Speicherkatalysatoren eingesetzt, wobei der NOx-Speicher des Katalysators während des Magerbetriebs das NOx speichert und es während des Fettbetriebs des Motors wieder abgibt. Dabei wird das abgegebene NOx in dem Katalysator durch die reduzierenden Bestandteile des fetten Abgases reduziert.

Die Menge an NOx, die der NOx-Speicher des Absorberkatalysators aufnehmen kann, ist begrenzt, so daß der NOx-Speicher nach längerem Magerbetrieb des Motors seine Aufnahmefähigkeit verliert. Es ist daher notwendig, den NOx-Speicher von Zeit zu Zeit zu regenerieren. Diese Regeneration kann nach fest vorgegebenen Zeitintervallen vorgenommen werden, was allerdings mit dem Nachteil verbunden ist, daß der NOx-Speicher regeneriert wird, obwohl seine Kapazität noch nicht erschöpft ist, was zu einem erhöhten Kraftstoffverbrauch aufgrund einer höheren Betriebsfrequenz des Motors im fetten Zustand führt. Ferner ist es möglich, die Beladung aus den vorliegenden Motordaten zu berechnen, was aber auch nur zu einer näherungsweisen Bestimmung der Beladung des NOx-Speichers führt. Daher muß bei diesem Regenerationsverfahren eine Sicherheitsmarge eingebaut werden, so daß ebenfalls mit einem erhöhten Kraftstoffverbrauch zu rechnen ist. Ferner kann der Zeitpunkt einer notwendigen Regeneration direkt durch einen NOx-Sensor anhand des Anstiegs des NOx-Signals bestimmt werden, der auftritt, wenn der NOx-Speicher voll ist. Allerdings bleibt hier die Frage offen, wie lange eine derartige Regeneration unter fetten Bedingungen durchgeführt werden muß, damit der NOx-Speicher vollständig entleert ist. Der Fettbetrieb des Motors sollte nach Möglichkeit nicht länger dauern als zur vollständigen Regeneration des NOx-Speichers notwendig ist, da andernfalls mit einem unnötig höheren Kraftstoffverbrauch zu rechnen ist.

Aus der DE-A-195 11 548 ist ein Verfahren und eine Vorrichtung zur Stickoxidreduzierung im Abgas einer Brennkraftmaschine bekannt, die abwechseind im Magerbetrieb und im stöchiometrischen oder Anreicherungsbetrieb gefahren wird. Dabei wird der Gehalt des Abgases an Kohlenwasserstoffen, Kohlenmonoxiden oder Stickoxiden in Strömungsrichtung des Abgases hinter einem NOx-Speicher durch einen geeigneten Sensor gemessen. Eine genaue Kenntnis des Regenerationsintervalls ist mit diesem Verfahren nicht möglich, so daß der Kraftstoffverbrauch nicht optimal ist.

Der Erfindung liegt daher die Aufgabe zugrunde, ein verbessertes Verfahren zur Bestimmung des Regenerationsintervalls eines NOx-Speicherkatalysators zu schaffen, um das Intervall des Fettbetriebs des Motors an die notwendige Regenerationszeit des NOx-Speichers anpassen zu können.

Die Aufgabe wird durch den Gegenstand des Anspruchs 1 gelöst. Bevorzugte Ausgestaltungen der Erfindung sind Gegenstand der Unteransprüche.

Durch das erfindungsgemäße Verfahren zur Bestimmung des Regenerationsintervalls eines NOx-Speicherkatalysators eines magerbetreibbaren Motors wird der Beginn und das Ende des Regenerationsintervalls durch einen NOx-Sensor detektiert, der zusätzlich zu seiner NOx-Empfindlichkeit eine Querempfindlichkeit auf mindestens ein durchbrechendes Abgasprodukt aufweist, das ein reduzierender Bestandteil des Abgases ist und erst ab der Beendigung der Regenerationsphase aus dem Katalysator austritt. Eine Querempfindlichkeit liegt vor, wenn der Sensor neben einer vorgesehenen NOx-Empfindlichkeit noch mindestens ein weiteres Produkt detektieren kann, das jedoch während der Nlcht-Regenerationsphase (Speicherphase) nicht oder nicht relevant auftritt und so ein Meßergebnis während der Nicht-Regenerationsphase nicht stört.

Vorzugsweise ist der reduzierende Bestandteil des Abgeses CO oder NH₃. Da durch den NOx-Sensor sowohl der Beginn als auch das Ende der Regenerationsphase präzise detektiert werden kann, ist eine genaue Bestimmung des notwendigen Regenerationsintervalls möglich, was zu einem optimalen Kraftstoffverbrauch des Magermotors führt.

Durch die Bestimmung des tatsächlichen Beginns und Endes des Regenerationsintervalls eröffnen sich für das Motormanagement eine Reihe von Möglichkeiten.

Zum einen wird das Sensorsignal, wie bereits geschildert, dazu benutzt, die Regenerationsphase des NOx-Speichers zu beenden und den Motor wieder mager zu betreiben.

Ferner kann das Sensorsignal zur Korrektur des in der Motormanagementeinheit des Motors gespeicherten NOx-Speicher-/Regenerationsmodells verwendet werden. Dazu ist zu sagen, daß üblicherweise die Regeneration bzw. deren Dauer aus dem in der Motormanagemanteinheit abgelegten Motorkennfeld abgeleitet wird. Da das Kennfeld die Motoreigenschaften im Verlauf des Betriebs des Motors nur unzureichend wiedergibt, kann das Kennfeld an die tatsächlichen Verhältnisse durch die Kenntnis des tatsächlichen Regenerationsintervalls angepaßt werden, indem von Zeit zu Zeit beispielsweise nicht nach dem abgelegten Kennfeld regeneriert wird, sondern die Regeneration über die gemessenen Sensorsignale erfolgt. Ferner wird so der Mortormanagsmenteinheit die Möglichkeit gegeben, die Abweichung des abgelegten Kennfeldes von der Realität zu bestimmen. Dies kann nach einem festen Schema ablaufen, beispielsweise kann jedes 5te -5000te Mal, vorzugsweise jedes 10te - 500te Mal, oder jedes 100te Mal die Regenerationsdauer nach dem Sensorsignal bestimmt werden, bzw. nach dem Warmlaufen des Motors kann diese Regeneration nach der tatsächlichen Messung auch jedes 1te - 5te Mal erfolgen.

Ferner kann das Sensorsignal, d. h. der Zeitpunkt der Beendigung der Regeneration, zur Bestimmung des Alterungszustandes des Katalysators verwendet werden, Indem die tatsächliche Regenerationsdauer mit der in der Motormanagementeinheit abgelegten Sollregenerationsdauer verglichen wird.

Eine bevorzugte Ausführungsform wird nachfolgend anhand der Zeichnungen erläutert.
- Fig. 1: zeigt schematisch eine Magermotoranlage, und
- Fig. 2: zeigt schematisch das Verhalten eines NOx-Sensors während eines magerfett Zyklus.

Eine Motoranlage eines Magermotors umfaßt einen magerbetreibbaren Motor 1, dessen Abgasanlage einen optionalen Vorkatalysator 2, einen NOx-Speicherkatalysator 3 und einen im Endrohr 4 der Abgasanlage angeordneten NOx-Sensor 5 umfaßt. Das Meßsignal des NOx-Sensors 5 wird in einer Motormanagementeinheit 6 verarbeitet, die den Motor 1, insbesondere den Fett- und Magerbetrieb, steuert. Als NOx-Sensoren 5 kommen Dickfilm-NOx-Sensoren, wie sie von Kato et. al.: "Performance of Thick Film NOx-Sensor on Diesel and Gasoline Engines", Soc. Of Automotive Engineers, 1997, S. 199-201 beschrieben sind, in Betracht. Derartige NOx-Sensoren werden beispielsweise von der Fa. NGK Spark Plugs Co./NTK hergestellt.

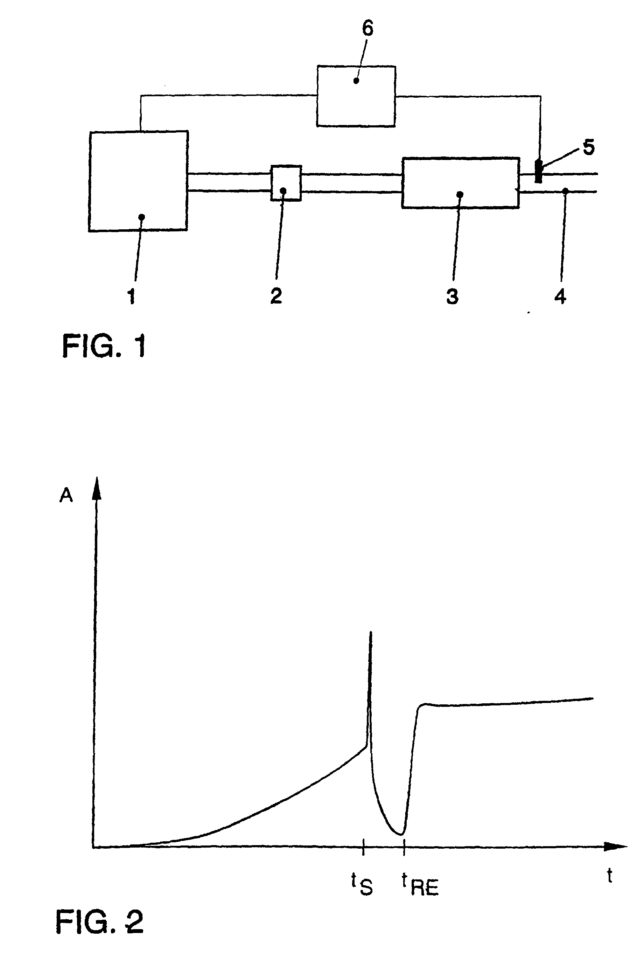

Fig. 2 zeigt das Verhalten eines derartigen NOx-Sensors während eines mager-fett Zyklus eines magerbetreibbaren Motors. Aufgetragen ist die Zeit t gegenüber dem Ausgangssignal A des NOx-Sensors 5. Dabei ist der NOx-Sensor 5, wie in der Fig. 1 dargestellt, hinter dem NOx-Speicherkatalysator 3 angeordnet. Während des Zeitintervall 0 - t_{S} wird der Motor mager betrieben. Mit zunehmender Füllung des NOx-Speichers steigt die Konzentration der Stickoxide, die vom NOx-Speicher nicht mehr gespeichert werden können und daher durch den NOx-Spelcherkatalysator hindurch laufen. Daraus resultiert die immer stärker ansteigende Kurve des Ausgangssignals des NOx-Sensors 5. Mit dem Erreichen eines vorbestimmten Schwellwertes oder wenn der Anstieg des NOx-Signals einen vorbestimmten Gradienten erreicht hat, d.h. im Zeitpunkt t_{S}, wird zur Durchführung der Regeneration des NOx-Speichers in den fetten oder stöchiometrischen Motorbetrieb umgeschaltet. Dabei kann sich nach dem Katalysator 3 ein Peak ergeben, dessen Höhe und Dauer u.a. von der Sauerstoffspeicherfähigkeit des eingesetzten Katalysators und der Güte des Umschaltvorgangs abhängt. Während der Regeneration, die im Zeitintervall t_{S} - t_{RE} stattfindet, fällt die NOx-Konzentration hinter dem Katalysator 3 ab, d. h. die Konzentration geht im Idealfall auf Null zurück. Damit fällt auch das Ausgangssignal des NOx-Sensors 5 auf Null. In diesem Regenerationsintervall werden die vom Motor 1 emittierten Fettkomponenten im Katalysator 3 zur Reduktion des NOx verbraucht. Im Zeitpunkt t_{RE} ist die Regeneration des NOx-Speichers beendet, d. h. es ist im NOx-Speicher kein NOx mehr gespeichert, das die Fettkomponenten des Abgases zur Reduktion verbraucht. Infolgedessen strömen die Fettkomponenten das Abgases durch den Katalysator 3 hindurch. Da der NOx-Sensor eine Querempfindlichkeit gegenüber mindestens einer reduzierenden Komponente des Abgases aufweist, sorgen diese Fettkomponenten am NOx-Sensor für einen Anstieg des Ausgangssignals A. Folglich definiert der Zeitpunkt t_{RE'} der den Durchbruch der reduzierenden Komponenten hinter dem Katalysator 3 markiert, das Ende der Regenerationsphase des NOx-Speicher des Katalysators 3 und der Motor kann vom Motormanagement 6 wieder in den mageren Betrieb umgeschaltet werden.

### BEZUGSZEICHENLISTE

- 1: Motor
- 2: Vorkatalysator
- 3: NOx-Speicherkatalysator
- 4: Endrohr
- 5: NOx-Sensor
- 6: Motormanagement
- A: Amplitude Sensorsignal
- t: Zeit
- t_{S}: Beginn Regeneration
- t_{RE}: Ende Regeneration

## Patentansprüche

1. Verfahren zur Bestimmung des Beginns (t_{S}) und des Endes (t_{RE}) eines Regenerationsintervalls eines NOx-Speicherkatalysators (3) eines magerbetreibbaren Motors (1), wobei der Beginn der Regenerationsphase (t_{S}) durch einen NOx-Sensor (5) detektiert wird,
**dadurch gekennzeichnet, daß**
das Ende der Regenerationsphase (t_{RE}) des NOx-Speichers des Katalysators (3) durch den NOx-Sensor (5) detektiert wird, der eine Querempfindlichkeit auf mindestens ein Abgasprodukt aufweist, das reduzierender Bestandteil des Abgases ist und dessen Austritt aus dem Katalysator (3) zur Bestimmung des Endes der Regenerationsphase (t_{RE}) des Katalysators (3) verwendet wird.

2. Verfahren nach Anspruch 1, **dadurch gekennzeichnet**, das der reduzierende Bestandteil CO ist.

3. Verfahren nach Anspruch 1, dadurch gekennzeichet, daß der reduzierende Bestandteil NH₃ ist.

4. Verwendung des Verfahrens nach einem der Ansprüche 1 - 3, zur Steuerung der Regenerationsphase (t_{S}, t_{RE}) des NOx-Speichers des Katalysators (3).

5. Verwendung des Verfahrens nach einem der Ansprüche 1 - 3 zur Korrektur des NOx-Speicher-/Regenerationsmodells des Motormanagements.

6. Verwendung des Verfahrens nach einem der Ansprüche 1 - 3 zur Bestimmung des Alterungszustandes des Katalysators (3) durch Vergleich der tatsächlichen Regenerationsdauer (t_{S} - t_{RE}) mit der in einer Motormanagementeinheit (6) gespeicherten Sollregenerationszelt.

## Claims

1. Method for determining the start (t_{S}) and end (t_{RE}) of a regeneration interval of an NOx storage catalytic converter (3) of an engine (1) which can be operated in lean-burn mode, the start of the regeneration phase (t_{S}) being detected by an NOx sensor (5), **characterized in that** the end of the regeneration phase (t_{RE}) of the NOx store of the catalytic converter (3) is detected by the NOx sensor (5), which has a cross-sensitivity for at least one exhaust-gas product which is a reducing constituent of the exhaust gas and the escape of which from the catalytic converter (3) is used to determine the end of the regeneration phase (t_{RE}) of the catalytic converter (3).

2. Method according to Claim 1, **characterized in that** the reducing constituent is CO.

3. Method according to Claim 1, **characterized in that** the reducing constituent is NH₃.

4. Use of the method according to one of Claims 1-3 for controlling the regeneration phase (t_{S}, t_{RE}) of the NOx store of the catalytic converter (3).

5. Use of the method according to one of Claims 1-3 for correcting the NOx store/regeneration model of the engine management system.

6. Use of the method according to one of Claims 1-3 for determining the ageing state of the catalytic converter (3) by comparing the actual regeneration time (t_{S}-t_{RE}) with the desired regeneration time, which is stored in the engine management unit (6).

## Revendications

1. Procédé pour la détermination du commencement (t_{S}) et de la fin (t_{RE}) d'un intervalle de régénération d'un catalyseur d'accumulation de NOx (3) d'un moteur fonctionnant en mélange pauvre (1), dans lequel le commencement de la phase de régénération (t_{S}) est détecté par un capteur de NOx (5), **caractérisé en ce que** la fin de la phase de régénération (t_{RE}) de l'accumulateur de NOx du catalyseur (3) est détectée par le capteur de NOx (5), qui présente une sensibilité croisée à au moins un autre produit des gaz d'échappement, qui est un composant réducteur des gaz d'échappement et dont la sortie hors du catalyseur (3) est utilisée pour la détermination de la fin de la phase de régénération (t_{RE}) du catalyseur (3).

2. Procédé suivant la revendication 1, **caractérisé en ce que** le composant réducteur est le CO.

3. Procédé suivant la revendication 1, **caractérisé en ce que** le composant réducteur est le NH₃.

4. Utilisation du procédé suivant l'une quelconque des revendications 1 à 3, pour la régulation de la phase de régénération (t_{S}, t_{RE}) de l'accumulateur de NOx du catalyseur (3).

5. Utilisation du procédé suivant l'une quelconque des revendications 1 à 3, pour la correction du modèle de régénération de l'accumulateur de NOx pour la gestion du moteur.

6. Utilisation du procédé suivant l'une quelconque des revendications 1 à 3, pour la détermination de l'état de vieillissement du catalyseur (3) par comparaison de la durée effective de régénération (t_{S} - t_{RE}) avec le temps de régénération de consigne mémorisé dans l'unité de gestion du moteur (6).
